# EUROPEAN PATENT APPLICATION

(11) **EP 2 648 402 A1**
(43) Date of publication of application: **09.10.2013**
(21) Application number: 12734172.5
(22) Date of filing: 11.01.2012
(51) Int. Cl.: H04N 5/232

(54) **PHOTOGRAPHY CONTROL METHOD, PHOTOGRAPHY CONTROL DEVICE, AND PHOTOGRAPHIC DEVICE**

(30) Priority: 11.01.2011 CN 201110021908
(71) Applicant: Huawei Device Co., Ltd., Longgang District Shenzhen Guangdong 518129 (CN)
(72) Inventor: LI, Bao, Shenzhen Guangdong 518129 (CN)
(74) Representative: Haley, Stephen
(86) International application number: PCT/CN2012/070227
(87) International publication number: WO 2012/095001

(57) **Abstract**

Embodiments of the present invention provide a shooting control method, a shooting control apparatus, and a shooting apparatus. The method includes: when it is detected that a shooting module of a shooting apparatus starts, starting a sensor disposed on the shooting apparatus to sense an object approaching the shooting apparatus, where the sensor is configured to generate a sensor signal when it is sensed that there is an object approaching the shooting apparatus; when it is detected that the sensor generates a first valid sensor signal, starting the shooting module to perform a focusing operation; after it is detected that the shooting module completes focusing, detecting whether the senor generates a second valid sensor signal; and if it is detected that the sensor generates the second valid sensor signal, starting the shooting module to perform a shooting operation. The embodiments of the present invention avoid shaking during shooting and focusing, thereby improving a shooting effect of the shooting apparatus.

## Description

This application claims priority to Chinese Patent Application No. 201110021908.7, filed with the Chinese Patent Office on January 11, 2011 and entitled "SHOOTING CONTROL METHOD, SHOOTING CONTROL APPARATUS, AND SHOOTING APPARATUS", which is hereby incorporated by reference in its entirety.

### TECHNICAL FIELD

Embodiments of the present invention relate to the field of electronic technologies, and in particular, to a shooting control method, a shooting control apparatus, and a shooting apparatus.

### BACKGROUND

With the continuous development of science and technology, a shooting technology is becoming more and more advanced, and people's requirements for a shooting effect of a shooting apparatus become higher and higher. When using a single-lens reflex shooting apparatus for shooting, a photographer needs to adjust an appropriate parameter, such as aperture and focal length, according to an actual condition to shoot a picture with a better effect. When a user manually adjusts a parameter for a shooting apparatus (for example, manual focusing) or manually shoots a picture, a hand may shake, thereby affecting a shooting effect. Therefore, to shoot a picture with a better effect, focusing and anti-shake problems must be resolved.

In the prior art, automatic focusing is used to replace user manual focusing. A plurality of camera chips provide an anti-shake function. During automatic focusing, a user first needs to half-press a certain key to focus on an object to be shot, and then long-press the key for shooting after the automatic focusing is completed. An automatic focusing technique reduces a difficulty in shooting for a user and brings convenience to the user.

However, when using a shooting apparatus with automatic focusing and anti-shake for shooting, a user still needs to manually half-press a key for automatic focusing and then long-press the key for shooting. An existing anti-shake technique still cannot overcome a shooting defect caused by shaking, thereby affecting a shooting effect.

### SUMMARY

Embodiments of the present invention provide a shooting control method, a shooting control apparatus, and a shooting apparatus, which are used to avoid shaking during focusing and shooting, thereby achieving a purpose of improving a shooting effect of a shooting apparatus.

An embodiment of the present invention provides a shooting control method, including:
when it is detected that a shooting module of a shooting apparatus starts, starting a sensor disposed on the shooting apparatus to sense an object approaching the shooting apparatus; where the sensor is configured to generate a sensor signal when it is sensed that there is an object approaching the shooting apparatus;
when it is detected that the sensor generates a first valid sensor signal, starting the shooting module to perform a focusing operation;
after it is detected that the shooting module completes focusing, detecting whether the sensor generates a second valid sensor signal; and
if it is detected that the sensor generates the second valid sensor signal, starting the shooting module to perform a shooting operation.

An embodiment of the present invention further provides a shooting control apparatus, including:
a focusing sensing starting module, configured to: when it is detected that a shooting module of a shooting apparatus starts, start a sensor disposed on the shooting apparatus to sense an object approaching the shooting apparatus; where the sensor is configured to generate a sensor signal when it is sensed that there is an object approaching the shooting apparatus;
a focusing starting module, configured to: when it is detected that the sensor generates a first valid sensor signal, start the shooting module to perform a focusing operation;
a shooting sensing starting module, configured to: after it is detected that the shooting module completes focusing, detect whether the sensor generates a second valid sensor signal; and
a shooting starting module, configured to: if it is detected that the sensor generates the second valid sensor signal, start the shooting module to perform a shooting operation.

An embodiment of the present invention further provides a shooting apparatus, including a shooting module and further including the foregoing shooting control apparatus and a sensor disposed on the shooting apparatus, where the sensor is configured to sense an object approaching the shooting apparatus, and generate a sensor signal when it is sensed that there is an object approaching the shooting apparatus.

In the shooting control method, the shooting control apparatus, and the shooting apparatus that are provided in the embodiments of the present invention, a sensor is disposed on a shooting apparatus to obtain a sensor signal generated when the shooting apparatus is approached. According to a sensing result of the sensor, a main control apparatus of the shooting apparatus starts a shooting module to perform a focusing operation or a shooting operation, thereby achieving a purpose that a user does not need to manually trigger a focusing operation or a shooting operation. The sensor may be disposed in any position on the shooting apparatus; to facilitate a user operation and reduce interference from another signal on the sensor, a best position of the sensor is near a shutter or a power switch of the shooting apparatus. In the embodiments of the present invention, a shooting mode of the shooting apparatus may be set to an automatic shooting mode, and may also be set to a manual shooting mode. When it is set to the automatic shooting mode, a user does not need to perform manual focusing and manual shooting. Therefore, shaking during manual focusing and manual shooting is avoided, thereby improving a shooting effect of the shooting apparatus.

### BRIEF DESCRIPTION OF DRAWINGS

To illustrate the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and persons of ordinary skill in the art may still derive other drawings according to these accompanying drawings without creative efforts.

FIG. 1 is a flowchart of a first embodiment of a shooting control method according to the present invention;

FIG. 2 is a flowchart of a second embodiment of a shooting control method according to the present invention;

FIG. 3 is a schematic structural diagram of a first embodiment of a shooting control apparatus according to the present invention;

FIG. 4 is a schematic structural diagram of a second embodiment of a shooting control apparatus according to the present invention; and

FIG. 5 is a schematic structural diagram of an embodiment of a shooting apparatus according to the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

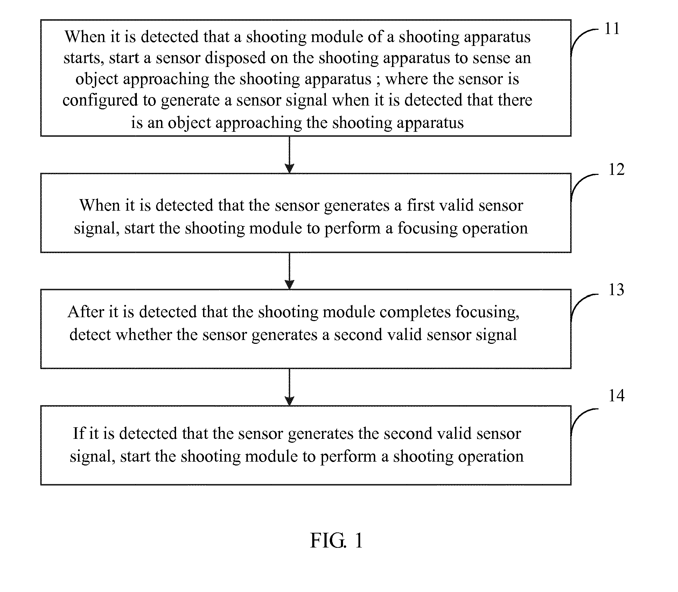

FIG. 1 is a flowchart of an embodiment of a shooting control method according to the present invention. An executor of the embodiment is a main control apparatus disposed on a shooting apparatus, such as a central processing unit (CPU). In the embodiment, a sensor is disposed on the shooting apparatus, and is configured to sense whether there is an object approaching the shooting apparatus. As shown in FIG. 1, the embodiment includes:

Step 11: When it is detected that a shooting module of a shooting apparatus starts, start a sensor disposed on the shooting apparatus to sense an object approaching the shooting apparatus; where the sensor is configured to generate a sensor signal when it is sensed that there is an object approaching the shooting apparatus.

After a user starts the shooting module to enter a shooting preview interface and aims a lens at an object to be shot, the user usually needs to adjust a focal length between the object to be shot and the lens of the shooting module to perform a focusing operation. To avoid shaking caused by manual focusing and manual shooting, in the embodiment of the present invention, the sensor is disposed on the shooting apparatus to obtain a sensor signal generated when the shooting apparatus is approached. In a case that a shooting mode of the shooting apparatus is set to automatic shooting, when it is detected that the user starts the shooting module to enter the preview interface, a main control apparatus gives a prompt that the user needs to use a finger or an electronic pen to approach a valid sensing area on the sensor on the shooting apparatus to trigger a focusing operation after the user aims the lens at the object to be shot, and informs the user of approaching the valid area of the shooting apparatus and a minimum duration of the approaching when the user triggers the focusing operation. After it is detected by the main control apparatus that the shooting module starts, sensing is started.

In the embodiment of the present invention, the sensor may be a proximity sensor that is capable of detecting that an object operating the shooting apparatus approaches the shooting apparatus. When the object approaches the proximity sensor at a certain distance, the proximity sensor generates a sensor signal. A type of the proximity sensor may be selected according to a characteristic of the object operating the shooting apparatus, an installation manner of the sensor, an environmental factor, and so on. For example, when a user uses a finger to operate the shooting apparatus, a proximity sensor that is capable of sensing human infrared rays may be selected. When a metallic pen or an operation pen made of another material is used to operate the shooting apparatus, an inductive proximity sensor or a capacitive proximity sensor, or the like, may be selected.

Step 12: When it is detected that the sensor generates a first valid sensor signal, start the shooting module to perform a focusing operation.

After the main control apparatus starts the sensor, the sensor starts to sense whether there is an object approaching the shooting apparatus. When a position of the object approaching the shooting apparatus is in a sensing area of the sensor, the sensor generates a sensor signal. If a sensor signal generated when a distance between the position of the object approaching the shooting apparatus and the sensor is smaller than or equal to a preset distance has a duration larger than or equal to a preset duration value, the main control apparatus determines that the sensor generates a valid sensor signal.

The detected valid sensor signal generated by the sensor after the main control apparatus starts the sensor is the first valid sensor signal. When it is detected that the sensor generates the first valid sensor signal, the main control apparatus determines that the user triggers a focusing operation and starts the shooting module to perform a focusing operation.

Step 13: After it is detected that the shooting module completes focusing, detect whether the sensor generates a second valid sensor signal.

After it is detected that the focusing to the shooting module is completed, the main control apparatus may provide prompt information to prompt the user that the focusing is completed and to shoot within preset time, and meanwhile, detect whether the sensor generates a valid sensor signal. The valid sensor signal that is generated by the sensor and detected by the main control apparatus after the shooting module completes the focusing is the second valid sensor signal. Specifically, after it is detected that the shooting module completes the focusing, the main control apparatus instructs the sensor to sense the object approaching the shooting apparatus within the preset time.

Step 14: If it is detected that the sensor generates the second valid sensor signal, start the shooting module to perform a shooting operation.

The main alternation apparatus starts the shooting module to perform a shooting operation when detecting that the sensor generates the second valid sensor signal and determining that the user triggers a shooting operation. Specifically, within the preset time, if it is detected that the sensor generates the second valid sensor signal,the main alternation apparatus starts the shooting module to perform a shooting operation.

To avoid shaking caused by manual focusing and manual shooting, in the embodiment of the present invention, a sensor is disposed on a shooting apparatus to obtain a sensor signal generated when the shooting apparatus is approached. A main control apparatus of the shooting apparatus starts, according to a sensing result of the sensor, a shooting module to perform a focusing operation or a shooting operation, thereby achieving a purpose that a user does not need to manually trigger a focusing operation or a shooting operation. The sensor may be disposed in any position on the shooting apparatus; to facilitate a user operation and reduce interference from another signal on the sensor, a best position of the sensor is near a shutter or a power switch of the shooting apparatus. In the embodiment of the present invention, a shooting mode of the shooting apparatus may be set to an automatic shooting mode, and may also be set to a manual shooting mode. When it is set to the automatic shooting mode, a user does not need to perform manual focusing and manual shooting. Therefore, shaking during manual focusing and manual shooting is avoided, thereby improving a shooting effect of the shooting apparatus.

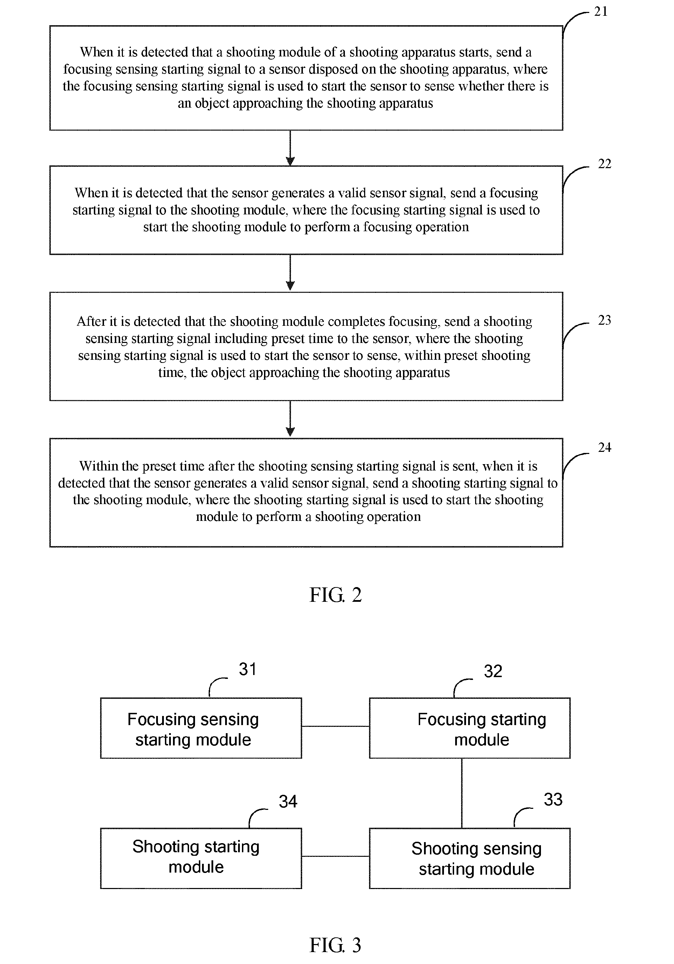

FIG. 2 is a flowchart of an embodiment of a shooting control method according to the present invention. As shown in FIG. 2, the embodiment includes:

Step 21: When it is detected that a shooting module of a shooting apparatus starts, a main control apparatus sends a focusing sensing starting signal to a sensor disposed on the shooting apparatus, where the focusing sensing starting signal is used to start the sensor to sense whether there is an object approaching the shooting apparatus.

In a case that a shooting mode of the shooting apparatus is set to automatic shooting, when it is detected that a user starts the shooting module to enter a preview interface, the main control apparatus gives a prompt that the user needs to use a finger to approach a valid sensing area on the sensor on the shooting apparatus to trigger a focusing operation after the user aims a lens at an object to be shot, and informs the user of connecting to the valid area of the shooting apparatus and a minimum duration of the connecting when the user triggers the focusing operation. In addition, the main control apparatus further sends the focusing sensing starting signal to the sensor and starts the sensor to sense whether there is an object (which is specifically a user's finger that operates the shooting apparatus) approaching the valid sensing area of the sensor on the shooting apparatus.

In addition, when the shooting mode of the shooting apparatus is set to a manual mode, after the user enters a preview interface, the shooting apparatus needs to start focusing and shooting by manually pressing a key or a button by the user. In the embodiment of the present invention, the shooting apparatus may provide an interface or a port for the user to select a shooting mode. Regarding setting of the shooting mode, a prompt reminding the user of selecting a shooting mode may appear after the user enters the preview interface of the shooting apparatus, or a prompt reminding the user of selecting a shooting mode may appear before the user enters the preview interface of the shooting apparatus.

Step 22: When it is detected that the sensor generates a valid sensor signal, the main control apparatus sends a focusing starting signal to the shooting module, where the focusing starting signal is used to start the shooting module to perform a focusing operation.

After receiving the focusing starting signal sent by the main control apparatus, the sensor starts to sense whether there is an object approaching the shooting apparatus. When a position of the object approaching the shooting apparatus is in a sensing area of the sensor, the sensor generates a sensor signal. If a sensor signal generated when a distance between the position of the object approaching the shooting apparatus and the sensor is smaller than or equal to a preset distance has a duration larger than or equal to a preset duration value, it is regarded that the sensor generates a valid sensor signal.

When the sensor generates the valid sensor signal, the main control apparatus determines that the user triggers a focusing operation. A method for the main control apparatus to detect whether the sensor generates a valid sensor signal may be as follows: The main control apparatus actively obtains a sensor signal generated by the sensor and determines whether the sensor signal is a valid sensor signal; and alternatively, after the sensor generates a sensor signal, the sensor determines whether the sensor signal is a valid sensor signal. When it is determined that the sensor signal is a valid sensor signal, the sensor reports the sensor signal to the main control apparatus. For example, when the sensor generates a sensor signal, the sensor determines whether the sensor signal is the sensor signal generated when the distance between the position of the object approaching the shooting apparatus and the sensor is smaller than or equal to the preset distance; if yes, further determines whether a duration of the sensor signal is larger than or equal to the preset duration value (a minimum duration). If the sensor signal is the sensor signal generated when the distance between the position of the object approaching the shooting apparatus and the sensor is smaller than or equal to the preset distance, and has a duration larger than or equal to the preset duration value, the sensor signal is regarded as a valid sensor signal. A sensor signal out of the foregoing range is regarded as an invalid sensor signal, and it is regarded that the user has not triggered a focusing operation. The shooting apparatus may provide a port for a user to self-define a preset duration value.

Step 23: After it is detected that the shooting module completes focusing, the main control apparatus sends a shooting sensing starting signal including preset time to the sensor, where the shooting sensing starting signal is used to start the sensor to sense, within the preset time, the object approaching the shooting apparatus;

After it is detected that the focusing to the shooting module is completed, the main control apparatus may provide prompt information to prompt the user that the focusing is completed and to shoot within preset time, and meanwhile, send a shooting sensing starting signal to the sensor, to inform the sensor of continuing sensing a sensor signal generated by the object approaching the shooting apparatus. Or, after it is detected that the focusing to the shooting module is completed, the main control apparatus displays a dialog box to prompt the user whether to shoot within preset time; if the user selects "No", the main control apparatus instructs the sensor to stop sensing; if the user selects "Yes", the main control apparatus sends a shooting sensing starting signal to the sensor. The shooting apparatus may provide a port for a user to self-define the preset time.

Step 24: Within the preset time after the shooting sensing starting signal is sent, when it is detected that the sensor generates a valid sensor signal, the main control apparatus sends a shooting starting signal to the shooting module, where the shooting starting signal is used to start the shooting module to perform a shooting operation.

After receiving the shooting sensing starting signal, the sensor continues sensing a sensor signal generated by the object approaching the shooting apparatus; if within the preset time, the main control apparatus detects that the sensor generates a valid sensor signal, the main control apparatus sends a shooting starting signal to the shooting module to instruct the shooting module to perform a shooting operation; further, if within the preset time, the main control apparatus does not detect that the sensor generates a sensor signal or the main control apparatus detects that a sensor signal generated by the sensor is not a valid sensor, the main control apparatus sends a shooting cancellation instruction signal to the shooting module of the shooting apparatus to instruct the shooting module to stop working.

Continuing with the foregoing statement, a method for the main control apparatus to detect, within the preset time, that the sensor generates a valid sensor signal is as follows: Within the preset time, when generating a valid sensor signal, the sensor outputs the valid sensor signal to the main control apparatus. After receiving the valid sensor signal, the main control apparatus sends a shooting starting signal to the shooting module. If the sensor does not generate a valid sensor signal within the preset time, the sensor does not output a signal to the main control apparatus, and the main control apparatus regards that the user does not perform a shooting operation and sends a shooting cancellation instruction signal to the shooting module. A method for the main control apparatus to detect that the sensor generates a valid sensor signal is as follows: Within the preset time, the main control apparatus actively obtains a sensor signal from the sensor and determines whether the obtained sensor signal is a valid sensor signal; if yes, the main control apparatus sends a shooting starting signal to the shooting module; if within the preset time, the main control apparatus does not obtain a valid sensor signal generated by the sensor or obtains a sensor signal which is not a valid sensor signal, the main control apparatus sends a shooting starting cancellation signal to the shooting module.

To avoid shaking caused by manual focusing and manual shooting, in the embodiment of the present invention, a sensor is disposed on a shooting apparatus to obtain a sensor signal generated when the shooting apparatus is approached. A main control apparatus of the shooting apparatus sends, according to a sensing result of the sensor, a focusing starting signal or a shooting starting signal to the shooting module, thereby implementing automatic focusing or automatic shooting. The sensor may be disposed in any position on the shooting apparatus; to facilitate a user operation and reduce interference from another signal on the sensor, a best position of the sensor is near a shutter or a power switch of the shooting apparatus. In the embodiment of the present invention, a shooting mode of the shooting apparatus may be set to an automatic shooting mode, and may also be set to a manual shooting mode. When it is set to the automatic shooting mode, a user does not need to perform manual focusing and manual shooting. Therefore, shaking during manual focusing and manual shooting is avoided, thereby improving a shooting effect of the shooting apparatus.

FIG. 3 is a schematic structural diagram of a first embodiment of a shooting control apparatus according to the present invention. As shown in FIG. 3, the embodiment includes: a focusing sensing starting module 31, a focusing starting module 32, a shooting sensing starting module 33, and a shooting starting module 34.

The focusing sensing starting module 31 is configured to: when it is detected that a shooting module of a shooting apparatus starts, start a sensor disposed on the shooting apparatus to sense an object approaching the shooting apparatus; where the sensor is configured to generate a sensor signal when it is sensed that there is an object approaching the shooting apparatus.

The focusing sensing starting module 31 is specifically configured to: when a shooting mode of the shooting apparatus is an automatic shooting mode, and if it is detected that the shooting module starts, send a focusing sensing starting signal to the sensor.

The focusing starting module 32 is configured to: when the focusing sensing starting module 31 detects that the sensor generates a first valid sensor signal, start the shooting module to perform a focusing operation.

The shooting sensing starting module 33 is configured to: after it is detected that the shooting module completes focusing, detect whether the sensor generates a second valid sensor signal. Specifically, the shooting sensing starting module 33 is specifically configured to: after it is detected that the shooting module completes focusing, instruct the sensor to sense, within preset time, the object approaching the shooting apparatus.

The shooting starting module 34 is configured to: if it is detected that the sensor generates the second valid sensor signal, start the shooting module to perform a shooting operation. Specifically, the shooting starting module 34 block is specifically configured to: if it is detected within the preset time that the sensor generates the second valid sensor signal, start the shooting module to perform a shooting operation.

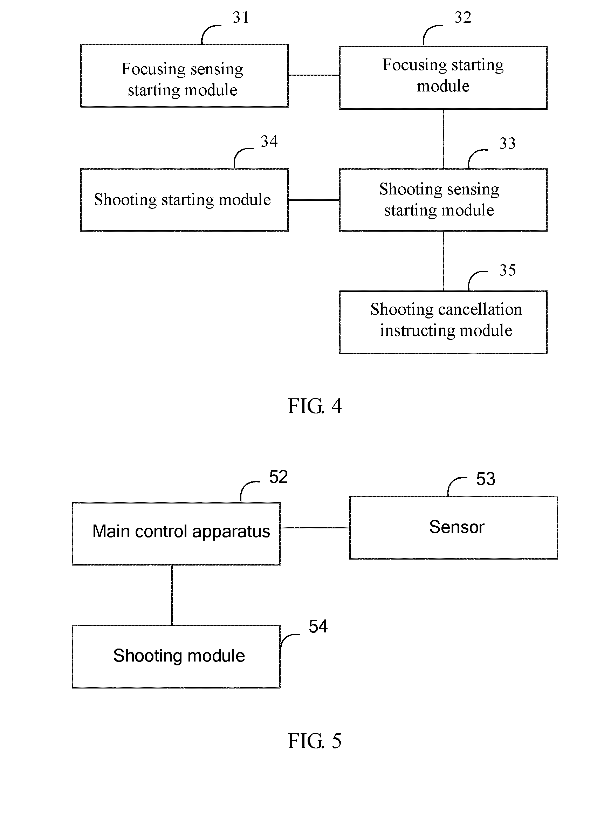

Further, as shown in FIG. 4, the embodiment of the present invention further includes a shooting cancellation instructing module 35.

The shooting cancellation instructing module 35 is configured to: when the shooting sensing starting module 33 does not detect, within the preset time, that the sensor generates the second valid sensor signal, instruct the shooting module to stop working.

In the embodiment of the present invention, the shooting control apparatus may be the main control apparatus in the embodiment corresponding to FIG. 1 or FIG. 2. For specific working content, reference may be made to the description in the embodiment corresponding to FIG. 1 or FIG. 2, which is not repeatedly described here.

In the embodiment of the present invention, after starting a sensor, a shooting control apparatus starts, according to a sensing result of the sensor, a shooting module of a shooting apparatus to perform a focusing operation or perform a shooting operation, thereby implementing automatic focusing or automatic shooting. Therefore, shaking during manual focusing and manual shooting is avoided, thereby improving a shooting effect of the shooting apparatus.

FIG. 5 is a schematic structural diagram of an embodiment of a shooting apparatus according to the present invention. As shown in FIG. 5, the embodiment includes: a main control apparatus 52, a sensor 53, and a shooting module 54; where the main control apparatus 52 may be the shooting control apparatus in the embodiment corresponding to FIG. 3 or FIG. 4; and the sensor 53 is configured to sense an object approaching a shooting apparatus, and generate a sensor signal when it is sensed that there is an object approaching the shooting apparatus.

The sensor 53 is a proximity sensor that is capable of detecting that an object operating the shooting apparatus approaches the shooting apparatus. When the object approaches the proximity sensor at a certain distance, the proximity sensor generates a sensor signal. The sensor may be disposed in any position on the shooting apparatus; to facilitate a user operation and reduce interference from another signal on the sensor, a best position of the sensor is near a shutter or a power switch of the shooting apparatus. A type of the proximity sensor may be selected according to a characteristic of the object operating the shooting apparatus, an installation manner of the sensor, an environmental factor, and so on. For example, when a user uses a finger to operate the shooting apparatus, a proximity sensor that is capable of sensing human infrared rays may be selected. When a metallic pen or an operation pen made of another material is used to operate the shooting apparatus, an inductive proximity sensor or a capacitive proximity sensor, or the like, may be selected.

In the embodiment of the present invention, a sensor is disposed on a shooting apparatus to obtain a sensor signal generated when the shooting apparatus is approached. A main control apparatus of the shooting apparatus starts, according to a sensing result of the sensor, a shooting module to perform a focusing operation or a shooting operation, thereby implementing automatic focusing or automatic shooting. Therefore, shaking during manual focusing and manual shooting is avoided, thereby improving a shooting effect of the shooting apparatus.

Persons of ordinary skill in the art may understand that, all or a part of the steps of the foregoing method embodiments may be implemented by a program instructing relevant hardware. The foregoing program may be stored in a computer readable storage medium. When the program runs, the foregoing steps of the foregoing method embodiments are performed. The storage medium includes any medium that is capable of storing program codes, such as a ROM, a RAM, a magnetic disk, or an optical disk.

Finally, it should be noted that, the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions recorded in the foregoing embodiments or make equivalent replacements to part of the technical features of the technical solutions recorded in the foregoing embodiments; however, these modifications or replacements do not make the essence of the corresponding technical solutions depart from the spirit and scope of the technical solutions of the embodiments of the present invention.

## Claims

1. A shooting control method, comprising:
when it is detected that a shooting module of a shooting apparatus starts, starting a sensor disposed on the shooting apparatus to sense an object approaching the shooting apparatus; wherein the sensor is configured to generate a sensor signal when it is sensed that there is an object approaching the shooting apparatus;
when it is detected that the sensor generates a first valid sensor signal, starting the shooting module to perform a focusing operation;
after it is detected that the shooting module completes focusing, detecting whether the sensor generates a second valid sensor signal; and
if it is detected that the sensor generates the second valid sensor signal, starting the shooting module to perform a shooting operation.

2. The shooting control method according to claim 1, wherein the after it is detected that the shooting module completes focusing, detecting whether the sensor generates a second valid sensor signal specifically is:
after it is detected that the shooting module completes the focusing, instructing the sensor to sense, within preset time, the object approaching the shooting apparatus; and
the if it is detected that the sensor generates the second valid sensor signal, starting the shooting module to perform a shooting operation specifically is:
if it is detected, within the preset time, that the sensor generates the second valid sensor signal, starting the shooting module to perform the shooting operation.

3. The shooting control method according to claim 1 or 2, wherein the first valid sensor signal or the second valid sensor signal is a sensor signal of which a duration is larger than or equal to a preset duration value and that is generated by the sensor when a distance between a position of the object approaching the shooting apparatus and the sensor is smaller than or equal to a preset distance.

4. The shooting control method according to claim 2, further comprising:
when it is not detected, within the preset time, that the sensor generates the second valid sensor signal, instructing the shooting module to stop working.

5. A shooting control apparatus, comprising:
a focusing sensing starting module, configured to: when it is detected that a shooting module of a shooting apparatus starts, start a sensor disposed on the shooting apparatus to sense an object approaching the shooting apparatus; wherein the sensor is configured to generate a sensor signal when it is sensed that there is an object approaching the shooting apparatus;
a focusing starting module, configured to, when it is detected that the sensor generates a first valid sensor signal, start the shooting module to perform a focusing operation;
a shooting sensing starting module, configured to, after it is detected that the shooting module completes focusing, detect whether the sensor generates a second valid sensor signal; and
a shooting starting module, configured to, if it is detected that the sensor generates the second valid sensor signal, start the shooting module to perform a shooting operation.

6. The shooting control apparatus according to claim 5, wherein the shooting sensing starting module is specifically configured to, after it is detected that the shooting module completes the focusing, instruct the sensor to sense, within preset time, the object approaching the shooting apparatus; and
the shooting starting module is specifically configured to, if it is detected, within the preset time, that the sensor generates the second valid sensor signal, start the shooting module to perform the shooting operation.

7. The shooting control apparatus according to claim 6, further comprising: a shooting cancellation instructing module, configured to, when it is not detected, within the preset time, that the sensor generates the second valid sensor signal, instruct the shooting module to stop working.

8. The shooting control apparatus according to claim 5 or 6, wherein the first valid sensor signal or the second valid sensor signal is a sensor signal of which a duration is larger than or equal to a preset duration value and that is generated by the sensor when a distance between a position of the object approaching the shooting apparatus and the sensor is smaller than or equal to a preset distance.

9. A shooting apparatus, comprising a shooting module, and further comprising:
the shooting control apparatus and the sensor disposed on the shooting apparatus according to any one of claims 5 to 8, wherein the sensor is configured to sense an object approaching the shooting apparatus and generate a sensor signal when it is sensed that there is an object approaching the shooting apparatus.
